(19) Europäisches Patentamt
European Patent Office
Office européen des brevets

(11) **EP 4 664 145 B1**

(12) **EUROPÄISCHE PATENTSCHRIFT**

(45) Veröffentlichungstag und Bekanntmachung des Hinweises auf die Patenterteilung:
**27.05.2026 Patentblatt 2026/22**

(21) Anmeldenummer: **24181380.7**

(22) Anmeldetag: **11.06.2024**

(51) Internationale Patentklassifikation (IPC):
**G01S 7/48** (2006.01) **G01S 17/89** (2020.01)

(52) Gemeinsame Patentklassifikation (CPC):
**G01S 17/89; G01S 7/4808**

(54) **VERFAHREN ZUM BEREITSTELLEN EINES AUSGABEDISTANZBILDES EINES LAUFZEITSENSORS, LAUFZEITSENSOR UND COMPUTERPROGRAMMPRODUKT**

METHOD FOR PROVIDING AN OUTPUT DISTANCE IMAGE OF A TIME-OF-FLIGHT SENSOR, TIME-OF-FLIGHT SENSOR AND COMPUTER PROGRAM PRODUCT

PROCÉDÉ DE FOURNITURE D'UNE IMAGE DE DISTANCE DE SORTIE D'UN CAPTEUR DE TEMPS DE PROPAGATION, CAPTEUR DE TEMPS DE PROPAGATION ET PRODUIT PROGRAMME INFORMATIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.12.2025 Patentblatt 2025/51**

(73) Patentinhaber: **SICK AG**
**79183 Waldkirch (DE)**

(72) Erfinder: **Erdmann, Jennifer**
**22969 Witzhave (DE)**

(74) Vertreter: **Manitz Finsterwald**
**Patent- und Rechtsanwaltspartnerschaft mbB**
**Martin-Greif-Straße 1**
**80336 München (DE)**

(56) Entgegenhaltungen:
**EP-A1- 3 663 881**

- LJUBOMIR JOVANOV ET AL: "Fuzzy logic-based approach to wavelet denoising of 3D images produced by time-of-flight cameras", OPTICS EXPRESS, vol. 18, no. 22, 25 October 2010 (2010-10-25), pages 22651 - 22676, XP055169693, ISSN: 1094-4087, DOI: 10.1364/OE.18.022651
- YAN CUI ET AL: "Algorithms for 3D Shape Scanning with a Depth Camera", IEEE TRANSACTIONS ON PATTERN ANALYSIS AND MACHINE INTELLIGENCE, IEEE COMPUTER SOCIETY, USA, vol. 35, no. 5, 1 May 2013 (2013-05-01), pages 1039 - 1050, XP011497451, ISSN: 0162-8828, DOI: 10.1109/TPAMI.2012.190

**Beschreibung**

Die vorliegende Erfindung betrifft ein computerimplementiertes Verfahren zum Bereitstellen eines Ausgabedistanzbildes eines Laufzeitsensors, einen Laufzeitsensor und ein Computerprogrammprodukt.

Laufzeitsensoren werden dazu eingesetzt, Distanzmessungen durchzuführen. Je nach Ausführungsform des Sensors kommen beispielsweise optische Signale zum Einsatz, welche in sogenannten LiDAR-Sensoren, engl. light detection and ranging, für die Messung verwendet werden. Eine andere Möglichkeit ist der Einsatz von Funksignalen bestimmter Frequenz und Modulation, die in einem Radarsensor benutzt werden. Beide Arten von Sensoren bestimmen die Distanz eines Objekts in der Umgebung des Sensors auf Basis des Prinzips der Laufzeitmessung, engl. time of flight. Dazu sendet ein derartiger Sensor ein gepulstes Sendesignal aus, welches an dem Objekt reflektiert wird. Die reflektierten Pulse werden in Form eines Echosignals detektiert. Auf Basis dieses Echosignals bestimmt der Sensor die Laufzeit der Pulse von dem Sensor zu dem Objekt und zurück. Die Distanz des Objekts errechnet sich als Produkt der Lichtgeschwindigkeit mit der Hälfte der bestimmten Laufzeit.

Die vorliegende Erfindung bezieht sich hauptsächlich auf LiDAR-Sensoren, die Distanzmessungen auf Basis von Lichtsignalen oder Lichtstrahlen durchführen. Das im folgenden vorgestellte Prinzip ist jedoch auch auf Radarsensoren anwendbar.

Die Genauigkeit der von einem Laufzeitsensor ermittelten Distanzwerte hängt von unterschiedlichen Einflussfaktoren ab. Unter anderem unterliegt die Distanzgenauigkeit von Laufzeitsensoren statistischen Schwankungen. Demzufolge ermittelt ein Laufzeitsensor selbst bei einem genau gleichen Szenario leicht unterschiedliche Distanzwerte. Diese statistischen Schwankungen sind dabei unabhängig von systematischen Fehlern eines Laufzeitsensors, beispielsweise den sogenannten Walkerrors. Um den statistischen Schwankungen der Distanzgenauigkeit von Laufzeitsensoren zu begegnen, werden die Messpunkte bekanntermaßen zeitlich oder räumlich gemittelt. Dabei werden der zeitlichen Mittelung mehrere Einzeldistanzbilder, sogenannte Frames, zugrunde gelegt, während für die räumliche Mittelung benachbarte Pixel desselben Einzelbildes verwendet werden. Dabei wird bisher jeweils eine feste Distanzdifferenzschwelle, beispielsweise 30 Zentimeter oder ein Meter, je nach Anwendungsfall, verwendet. Diese Schwelle wird üblicherweise so groß gewählt, dass auch in einem Szenario mit sehr ungünstigem Signal-Rauschabstand, engl. signalto-noise ratio, SNR, Datenpunkte gemittelt werden. Somit ist die Schwelle ist so ausgelegt, dass eine Optimierung für das schlechteste Szenario mit einer großen statistischen Varianz erfolgt. Üblicherweise wird diese feste Schwelle für alle Datenpunkte eines Einzelbildes verwendet. Die Wahl der Schwelle beeinflusst somit direkt das Ergebnis der gewünschten Optimierung.

Bei einer Mittelung von Bildpunkten ist zudem zu beachten, dass eine zeitliche Mittelung zu einer Verzögerung, engl. delay, führt, was insbesondere in sich schnell beweglichen Szenen nachteilig sein kann. Die Verzögerung vergrößert sich dabei mit der Erhöhung der Anzahl der zu mittelnden Einzelbilder. Eine räumliche Mittelung hingegen kann zu einer Verzerrung der Szene führen, insbesondere von nicht planaren Objekten beziehungsweise engl. targets, beispielsweise kleiner Ecken oder runder Flächen. Durch die räumliche Mittelung können sich derartige Kanten abschleifen. Anders ausgedrückt kann die räumliche Mittelung zu einer Glättung der Kanten führen.

Das Dokument von LJUBOMIR JOVANOV ET AL: "Fuzzy logic -based approach to wavelet denoising of 3D images produced by time -of -flight cameras", OPTICS EXPRESS, Bd. 18, Nr. 22, 25. Oktober 2010, beschreibt eine Methode zur Rauschunterdrückung in Tiefenbildern eines 3D-Bildsensors, der auf dem Prinzip der Lichtlaufzeit basiert. Es wird vorgeschlagen, die von einer Lichtlaufzeitkamera erzeugten Luminanz ähnlichen Informationen zusammen mit Tiefenbildern zu nutzen. Das Dokument von YAN CUI ET AL: "Algorithms for 3D Shape Scanning with a Depth Camera", IEEE TRANSACTIONS ON PATTERN ANALYSIS AND MA-CHINE INTELLIGENCE, IEEE COMPUTER SOCIETY, USA, Bd. 35, Nr. 5, 1. Mai 2013 diskutiert eine Methode zum Scannen von 3D-Objekten durch die Ausrichtung von Tiefenscans, die mit einer Time-of-Flight-Kamera (ToF) um ein Objekt herum aufgenommen wurden. EP 3 663 881 A1, beschreibt ein Verfahren zur Steuerung eines autonomen Fahrzeugs, welches einen optischen Sensor zur Erfassung von Objekten in einem Erfassungsbereich aufweist.

Demzufolge ist es eine Aufgabe der vorliegenden Erfindung, ein Verfahren sowie einen Laufzeitsensor anzugeben, welches gegenüber dem Stand der Technik eine Verbesserung der Distanzgenauigkeit, insbesondere der statistischen Distanzgenauigkeit, erreicht.

Die Aufgabe wird gelöst durch das computerimplementierte Verfahren zum Bereitstellen eines Ausgabedistanzbildes gemäß Anspruch 1 oder 2, sowie durch den Laufzeitsensor des Anspruchs 14. Weiterbildungen und Ausführungsformen sind jeweils Gegenstände der abhängigen Patentansprüche.

Die Aufgabe wird auch gelöst durch das computerimplementierte Verfahren zum Bereitstellen eines Ausgabedistanzbildes eines Laufzeitsensors gemäß Anspruch

Die eingangs angegebenen Definitionen gelten auch für die folgenden Ausführungen falls nichts anderes beschrieben wird.

Das Ausgabedistanzbild ist also ein Frame, welcher auf Basis eines zugeführten Einzelbildes, ebenfalls ein Frame, einer Szene ermittelt wird. Jeder Datenpunkt des Einzelbildes repräsentiert ein Pixel oder einen Messwinkel je nach Ausführung des Laufzeitsensors als feststehendes System, sogenanntes solid state, oder als rotierendes System. Jedem Datenpunkt ist mindestens ein Distanzwert, eine Intensität und ein Rauschlevel, welches ein Maß für das Signalrauschverhältnis ist und auch als Rauschbodenstärke bekannt ist, zugeordnet. Diese sind jeweils aus einem von dem Laufzeitsensor empfangenen Echosignal ermittelt worden. In manchen Ausführungsformen empfängt der Laufzeitsensor für einen Datenpunkt mehr als ein Echosignal, wodurch jeder Datenpunkt des Einzelbildes entsprechend der Anzahl der hierfür empfangenen Echosignale weitere Distanzwerte, Intensitäten und Rauschlevel aufweist. Zur Ermittlung des ersten und des zweiten Zwischenbildes kann in einem derartigen Fall mehr als ein Distanzwert pro Datenpunkt für die jeweilige zeitliche bzw. räumliche Mittelung herangezogen werden.

Für die Ermittlung des ersten Zwischenbildes wird nun eine zeitliche Mittelung der Distanzwerte vorgenommen. Hierfür werden mehrere Datenpunkte, bevorzugt alle Datenpunkte, eines Frames verwendet. Für die zeitliche Mittelung werden jeweils der Distanzwert eines Datenpunkts gleicher Position in einem vorangegangenen Einzelbild verwendet, dessen Distanzunterschied zum Distanzwert des betrachteten, also des zu mittelnden, Datenpunkts kleiner als die erste dynamische Schwelle ist.

Die räumliche Mittelung wird alternativ oder zusätzlich auf Basis des zeitlich gemittelten Frames, also des ersten Zwischenbildes, oder auf Basis des Einzelbildes durchgeführt. Hierfür werden mehrere oder alle Datenpunkte des jeweiligen Frames verwendet. Es wird von einer einstellbaren Anzahl benachbarter, insbesondere direkt benachbarter, Datenpunkte des zu mittelnden Datenpunkts ausgegangen. Beispielsweise werden die acht direkt benachbarten Datenpunkte eines 3x3 Pixelquadrats verwendet. Die Anzahl kann auch so eingestellt sein, dass die 15 Nachbarn eines 4x4 Pixelquadrats, in dem das betrachtete Pixel liegt, verwendet werden. Typischerweise werden nicht mehr als 35 Nachbarn in einem 6x6 Pixelquadrat verwendet. Zur Mittelung werden all jene Distanzwerte der Nachbarn herangezogen, deren Distanzunterschied zum Distanzwert des betrachteten und zu mittelnden Datenpunkts kleiner als die erste oder die zweite dynamische Schwelle ist. Die erste und/oder die zweite Schwelle können auch als Distanzdifferenzschwelle bezeichnet werden.

Das Ausgabedistanzbild des Laufzeitsensors, welches das erste oder das zweite Zwischenbild enthält, weist aufgrund der Verwendung der dynamischen ersten und/oder zweiten Schwelle eine im Vergleich zum Stand der Technik höhere Distanzgenauigkeit auf. Dadurch dass die erste und/oder die zweite dynamische Schwelle jeweils Signal-Rauschabstand-abhängig, also SNR-abhängig, ist, werden bei der Mittelung Datenpunkte nicht berücksichtigt, die einen größeren Distanzunterschied zum Distanzwert des betrachteten Datenpunkts aufweisen, als in der jeweiligen Schwelle dynamisch festgelegt ist. Somit wird vermieden, dass durch die Mittelung eine Verschlechterung entsteht, weil die Werte zu weit auseinander liegen. Aufgrund der SNR-Abhängigkeit und somit Echo-Intensitäts- und Rauschlevelabhängigkeit der ersten und/oder zweiten Schwelle wird die Mittelung an die Szene des Einzelbildes angepasst und somit die Distanzgenauigkeit des Ausgabedistanzbildes erhöht.

Gemäß einer Weiterbildung wird die erste dynamische Schwelle für den Datenpunkt jeweils in Abhängigkeit einer Standardabweichung des Distanzwerts des Datenpunkts des Einzelbildes oder des zweiten Zwischenbildes und der entsprechenden Datenpunkte der einstellbaren Anzahl von vorangegangenen Einzelbildern im Verhältnis zu einer jeweiligen Differenz der Distanzwerte des Einzelbildes oder des zweiten Zwischenbildes und der entsprechenden Datenpunkte der einstellbaren Anzahl von vorangegangenen Einzelbildern bestimmt. Die Standardabweichung, ist dabei auf die Intensität und das Rauschlevel des Datenpunkts bezogen.

Die Standardabweichung, welche eine Art statistischer Fehler ist, ist ein Maß für die Streuung der Distanzwerte eines Datenpunkts um seinen Erwartungswert, also den Mittelwert. Die erste dynamische Schwelle wird also beispielsweise in Abhängigkeit der Standardabweichung des Distanzwerts des Datenpunkts des Einzelbildes beziehungsweise des zweiten Zwischenbildes und der jeweiligen Standardabweichung der entsprechenden Datenpunkte vorangegangener Einzelbilder bezogen auf eine jeweilige Differenz der Distanzwerte des Einzelbildes oder zweiten Zwischenbildes und des jeweils entsprechenden Datenpunkts der vorangegangen Einzelbilder bestimmt. Somit wird die erste Schwelle dynamisch für jeden Datenpunkt neu festgelegt.

Gemäß einer Weiterbildung werden für die zeitliche Mittelung nur Distanzwerte des entsprechenden Datenpunkts von vorangegangenen Einzelbildern verwendet, deren Differenz zum Distanzwert des Datenpunkts des Einzelbildes oder des zweiten Zwischenbildes kleiner als eine Summe der Standardabweichungen des Distanzwerts des Datenpunkts des Einzelbildes oder des zweiten Zwischenbildes und des entsprechenden Datenpunkts des vorangegangenen Einzelbildes der einstellbaren Anzahl von vorangegangen Einzelbildern ist. Die Summe kann insbesondere eine gewichtete Summe sein..

Bei der Auswahl der Datenpunkte der vorangegangenen Einzelbilder, deren Distanzwert für die zeitliche Mittelung des gerade betrachteten Datenpunkts des Einzelbildes verwendet werden, wird die Differenz der jeweiligen Distanzwerte gebildet. Zudem wird eine unter Umständen gewichtete Summe der Standardabweichungen der Distanzwerte gemäß der folgenden Formel gebildet:

$$k_t * \left( \sigma_x + \sigma_j \right) \qquad (1)$$

Dabei bezeichnet kt einen Gewichtungsfaktor, der typischerweise zwischen eins und drei liegt, $\sigma_x$ die Standardabweichung des Distanzwerts des Datenpunkts des vorangegangenen Einzelbildes und $\sigma_j$ die Standardabweichung des Distanzwerts des aktuell betrachteten und zu mittelnden Datenpunkts des Einzelbildes oder des zweiten Zwischenbildes.

Bei der zeitlichen Mittelung werden also jeweils diejenigen Distanzwerte des selben Pixels der vorangegangenen Einzelbilder aussortiert, deren Distanzunterschied zum Distanzwert des selben Pixels des aktuellen Einzelbildes größer ist als die gewichtete Summe aus den zugehörigen Standardabweichungen. Durch diese Verwendung der Standardabweichung der Distanz jedes Datenpunkts wird bei der zeitlichen Mittelung die zeitliche Verzögerung minimiert, insbesondere in Bereichen mit mittel bis sehr gutem Signalrauschabstand. Statische Anteile der Szene des Einzelbildes werden weitreichend zeitlich gemittelt und erreichen dadurch eine optimale Präzision, während schnell veränderliche Anteile der Szene nicht oder nur über wenige Frames, also vorangegangene Einzelbilder, gemittelt werden, da sich die Distanzen schnell aus der optimal und gleichzeitig minimal gewählten Distanzschwelle oder Distanz-Threshold herausbewegen. Im Vergleich zur aus dem Stand der Technik bekannten festen Distanzdifferenzschwelle wird folglich für Bereiche mit mittel bis gutem Signal zu Rauschverhältnis eine deutlich kleinere Distanzdifferenzschwelle verwendet.

Gemäß einer Weiterbildung wird die Standardabweichung des Distanzwerts des Datenpunktes des Einzelbildes oder des zweiten Zwischenbildes jeweils aus einer ersten Tabelle, die durch vorangegangene Messungen bestimmt wurde, ausgewählt.

Die erste Tabelle wird beispielsweise als Nachschlagetabelle, oder engl. lookup table, realisiert. Die beispielsweise als 2D Nachschlagetabelle realisierte erste Tabelle gibt die statistische Standardabweichung des Distanzwerts eines Datenpunkts bezogen auf das Rauschlevel und die Intensität wieder. Beispielsweise hat diese 2D Lookup table folgendes Aussehen:

| | Intensität | 5 | 15 | 25 | 35 | 45 | 55 | 65 | 75 | 85 |
|---|---|---|---|---|---|---|---|---|---|---|
| Rauschlevel | | | | | | | | | | |
| 0 | | 25 | 15 | 10 | 8 | 6 | 5 | 4 | 3 | 2 |
| 10 | | - | 25 | 18 | 13 | 11 | 8 | 6 | 4 | 2 |
| 20 | | - | - | 25 | 18 | 13 | 11 | 7 | 5 | 2 |
| 30 | | - | - | - | 25 | 19 | 15 | 8 | 6 | 3 |
| 40 | | - | - | - | - | 25 | 20 | 12 | 7 | 3 |
| 50 | | - | - | - | - | - | 25 | 15 | 8 | 4 |
| 60 | | - | - | - | - | - | - | 25 | 15 | 5 |

Die Standardabweichungen der gemessenen Distanzen werden hier in Zentimetern angegeben. Da für Intensitäten, die kleiner als das Rauschlevel sind, keine Distanzwerte ermittelt werden, sind diese Einträge leer. In dem vorgeschlagenen Verfahren kann auch zwischen einzelnen Einträgen der Tabelle zusätzlich zweidimensional interpoliert werden. Dies führt zu einer noch weiter verbesserten Genauigkeit der gemittelten Distanzwerte.

Die Einträge der verwendeten ersten Tabelle werden durch eine vorangegangene Kalibrationsmessung ermittelt. Mit dieser Kalibrationsmessung wird der gesamte Bereich an Kombinationen von Gleichlichtstärken und Echosignalintensitäten eines Targets durchgemessen. Für jede Kombination von Rauschlevel und Echointensität wird ein Histogramm der gemessenen Distanz, also des Distanzwerts gebildet und davon die Standardabweichung bestimmt. Je schwächer das Signal zu Rauschverhältnis, also je höher das Rauschen beziehungsweise das Rauschlevel, und je kleiner die Echointensität, ist, desto höher ist der jeweilige statistische Distanzfehler $\sigma_j$.

Gemäß einer Weiterbildung wird die zweite dynamische Schwelle für den Datenpunkt jeweils in Abhängigkeit der Standardabweichung des Distanzwerts des Datenpunkts des ersten Zwischenbildes oder des Einzelbildes und der Standardabweichung jeweils eines der Datenpunkte der einstellbaren Anzahl von benachbarten Datenpunkten des ersten Zwischenbildes oder des Einzelbildes im Verhältnis zu einer jeweiligen Differenz der Distanzwerte des Datenpunkts des ersten Zwischenbildes oder des Einzelbildes und jeweils eines der entsprechenden Datenpunkte der einstellbaren Anzahl von benachbarten Datenpunkten des ersten Zwischenbildes oder des Einzelbildes bestimmt. Die Standardabweichung ist bezogen auf die Intensität und das Rauschlevel des jeweiligen Datenpunkts.

Die zweite dynamische Schwelle wird für die räumliche Mittelung eingesetzt. Für die zweite dynamische Schwelle werden jeweils die Distanzunterschiede eines der benachbarten Pixel zum betrachteten Pixel im Verhältnis zu den Standardabweichungen des betrachteten Pixels und des benachbarten Pixels herangezogen.

Gemäß einer Weiterbildung werden für die räumliche Mittelung nur Distanzwerte der benachbarten Datenpunkte aus dem ersten Zwischenbild oder dem Einzelbild verwendet, deren jeweilige Differenz zum Distanzwert des Datenpunkts des ersten Zwischenbildes oder des Einzelbildes kleiner als eine Summe der Standardabweichungen des Distanzwerts des Datenpunkts des ersten Zwischenbildes oder des Einzelbildes und des jeweiligen, benachbarten Datenpunkts der einstellbaren Anzahl von benachbarten Datenpunkte des ersten Zwischenbildes oder des Einzelbildes und eines Offsetwertes ist. Die Summe kann dabei insbesondere eine gewichtete Summe sein.

Die räumliche Mittelung wird auf Basis des bereits zeitlich gemittelten ersten Zwischenbildes durchgeführt, oder auf Basis des vom Sensor ermittelten Einzelbildes. Gemäß der folgenden Formel werden die Datenpunkte, deren Distanzwerte zur räumlichen Mittelung ausgewählt werden, bestimmt:

$$k_s * \left( \sigma'_x + \sigma'_j \right) + d \qquad (2)$$

Hierbei ist $k_s$ ein kalibrierbarer Faktor, der gleich oder unterschiedlich zum oben erwähnten Faktor kt gesetzt werden kann und typischerweise zwischen eins und drei liegt. $\sigma'_x$ bezeichnet die Standardabweichung des benachbarten Datenpunkts, $\sigma'_j$ bezeichnet die Standardabweichung des betrachteten Datenpunkts. d repräsentiert einen Offset, welcher konstant ist, und die räumliche Mittelung von schrägen Targets ermöglicht.

Sollte der räumlichen Mittelung bereits die zeitliche Mittelung vorangegangen sein, so werden unter Umständen neue statistische Distanzfehler für alle Datenpunkte berechnet. Diese werden bei Gauß-verteilten Distanzverteilungen beispielsweise gemäß folgender Formel ermittelt:

$$\sigma'_j = \frac{\sqrt{\sum_{k \epsilon F} \sigma_k^2}}{N_F} \qquad (3)$$

F bezeichnet die Menge an zeitlich gemittelten Distanzwerten, die den neuen Distanzwert des Datenpunkts des ersten Zwischenbildes ergeben hat. $N_F$ bezeichnet die Anzahl an Distanzwerten der Menge F.

Bei nicht Gauß-verteilten Distanzverteilungen kann approximativ auch eine andere Formel als Formel (3) verwendet werden.

Durch die Verwendung der Standardabweichung jedes Distanzwerts jedes Datenpunkts wird bei der räumlichen Mittelung die Weichzeichnung von Kanten minimiert. Dies betrifft insbesondere Kanten mit mittel bis sehr gutem Signal zu Rauschverhältnis. Durch die vorausgehende zeitliche Mittelung sind die Standardabweichungen noch geringer, sodass Kanten noch weniger verzerrt werden. Pixel zu Pixel Variationen werden ausgeglichen. der Distanzoffset d aus Formel (2) wird im Vergleich zu den Standardabweichungen der Distanzwerte klein gewählt.

Gemäß einer Weiterbildung wird die Standardabweichung des Distanzwerts des Datenpunkts des ersten Zwischenbildes oder des Einzelbildes jeweils aus einer zweiten Tabelle, die durch vorangegangene Messung bestimmt wurde, ausgewählt.

Die jeweilige die Standardabweichung wird bezogen auf die Intensität und das Rauschlevel des jeweiligen Datenpunkts aus der zweiten Tabelle ausgewählt. Diese wird ebenfalls durch vorangegangene Messung bestimmt, beispielsweise analog zur ersten Tabelle.

In einer alternativen Weiterbildung wird die Standardabweichung des Distanzwerts des Datenpunkts des ersten Zwischenbildes jeweils aus der ersten Tabelle, die anhand des ersten Zwischenbildes aktualisiert wurde, ausgewählt.

Sofern eine zeitliche Mittelung vor der räumlichen Mittelung durchgeführt wurde, wird die erste Tabelle auf Basis der Distanzwerte des ersten Zwischenbildes durch Mittelung mit Standardabweichungen gemäß oben beschriebener Formel (3) aktualisiert.

Gemäß einer Weiterbildung wird sowohl die zeitliche als auch die räumliche Mittelung auf Basis eines arithmetischen Mittelwerts oder eines gewichteten Mittelwerts ermittelt.

Für das arithmetische Mittel wird der Quotient gebildet aus der Summe der Distanzwerte der zur Mittelung ausgewählten Datenpunkte und der Anzahl der Datenpunkte. Hierfür kann beispielsweise folgende Formel eingesetzt werden:

$$\overline{d_\iota} = \frac{\sum_{k \epsilon F} d_k}{N_F} \qquad (4)$$

Darin bezeichnet $\overline{d_l}$ jeweils den gemittelten Distanzwert, $N_F$ bezeichnet die Anzahl an für die Mittelung verwendeten Datenpunkten.

Statt das arithmetische Mittel zu verwenden, kann der Distanzwert eines Datenpunkts nach Signal zu Rauschabstand oder Standardabweichung gewichtet gemittelt werden. Dadurch werden beispielsweise Distanzwerte mit kleinem statistischen Distanzfehler höher gewichtet als Distanzwerte mit hohem statistischen Distanzfehler. Als Gewichtungsfaktoren können beispielsweise die Verhältnisse der Standardabweichungen der Distanzwerte des gerade betrachteten Datenpunkts zu dem für die Mittelung verwendeten Datenpunkt oder der Quotient aus Intensität und Rauschlevel desselben Datenpunkts sein. Die gemittelte Distanz wird dann nach der folgenden Formel berechnet:

$$\overline{d_i} = \frac{\sum_{k \epsilon F} \alpha_k * d_k}{\sum_{k \epsilon F} \alpha_k} \qquad (5)$$

Dabei bezeichnet $\alpha_k$ jeweils den Gewichtungsfaktor.

Wird bei der zeitlichen Mittelung ein gewichtetes Mittel eingesetzt, so wird eine daraus resultierende aktualisierte Distanzstandardabweichung nach folgender Formel berechnet:

$$\sigma_j' = \frac{\sqrt{\sum_{k \epsilon F} \alpha_k^2 \sigma_k^2}}{\sum_{k \epsilon F} \alpha_k} \qquad (6)$$

In einer Weiterbildung weist das Verfahren nach dem Zuführen des Einzelbildes und vor dem Ermitteln des ersten oder des zweiten Zwischenbildes folgenden Schritt auf:
Aussortieren von Echosignalwerten des Datenpunkts unter Verwendung eines Existenzmaßfilters.

Für den Fall, dass für einen Datenpunkt des Einzelbildes mehr als ein Echosignal empfangen wurde, werden mit Hilfe eines Existenzmaßfilters Echosignalwerte wieder aussortiert, die unpassend sind. Beispielsweise wird das Existenzmaßfilter so eingestellt, sodass eine Falschpositivrate der Distanzwerte klein ist, beispielsweise unterhalb von 1%. Unsinnige Distanzwerte werden somit aussortiert und verfälschen nicht die anschließend vorgenommene zeitliche und räumliche Mittelung.

Gemäß einer Weiterbildung wird die zeitliche und/oder räumliche Mittelung jeweils zusätzlich in Abhängigkeit einer dritten Schwelle, welche intensitätsabhängig ist, durchgeführt.

Die zusätzliche dritte Schwelle kann als Intensitätsdifferenzschwelle bezeichnet werden. Im Einzelnen werden in dieser Weiterbildung für die zeitliche Mittelung nur Distanzwerte des entsprechenden Datenpunktes von vorangegangenen Einzelbildern verwendet, deren Intensitätsdifferenz zu einer Intensität des Datenpunktes des Einzelbildes oder des zweiten Zwischenbildes kleiner als eine Summe einer Standardabweichung einer Intensität des Datenpunkts des Einzelbildes oder des zweiten Zwischenbildes und des entsprechenden Datenpunkts des vorangegangenen Einzelbildes der einstellbaren Anzahl von vorangegangenen Einzelbildern ist. Die Summe ist dabei insbesondere eine gewichtete Summe. Für die räumliche Mittelung werden in dieser Weiterbildung nur Distanzwerte von benachbarten Datenpunkten aus dem ersten Zwischenbild oder dem Einzelbild verwendet, deren jeweilige Intensitätsdifferenz zur Intensität des Datenpunkts des ersten Zwischenbildes oder des Einzelbildes kleiner als eine Summe der Standardabweichung der Intensität des Datenpunkts des ersten Zwischenbildes oder des Einzelbildes und der Standardabweichung der Intensität des jeweiligen benachbarten Datenpunkts der einstellbaren Anzahl von benachbarten Datenpunkten des ersten Zwischenbildes oder des Einzelbildes ist.

In dieser Weiterbildung wird zusätzlich zur ersten beziehungsweise zweiten Schwelle, deren Distanzkriterium erfüllt ist, die dritte Schwelle angewendet. Für die zeitliche und für die räumliche Mittelung der Distanzwerte werden demnach jeweils nur jeweils Distanzwerte des gleich positionierten Datenpunkts eines vorangegangenen Einzelbildes, beziehungsweise Distanzwert jeweils benachbarter Datenpunkte berücksichtigt, die jeweils die oben definierte Bedingung erfüllen. Diese kann beispielhaft mit folgender Gleichung ausgedrückt werden:

$$k_i * (\sigma_x^{int} + \sigma_i^{int}) \qquad (7)$$

Dabei repräsentiert $k_i$ einen kalibrierbaren Faktor, der typischerweise zwischen eins und drei liegt, $\sigma_i^{int}$ die Standardabweichung der Intensität des zu mittelnden Datenpunkts, $\sigma_x^{int}$ die Standardabweichung der Intensität eines benachbarten Datenpunkts bei der räumlichen Mittelung oder die Standardabweichung der Intensität eines entsprechenden Datenpunkts im vorangegangenen Einzelbild bei der zeitlichen Mittelung.

Dadurch wird bewirkt, dass benachbarte Objekte oder Targets eines Einzelbildes, die jeweils eine unterschiedliche Reflektivität haben, aber einen geringen Distanzunterschied aufweisen, nicht miteinander gemittelt werden. So wird die Distanzgenauigkeit noch weiter verbessert.

Die Standardabweichungen als Repräsentanten des statistischen Fehlers der Intensitäten können beispielsweise einer Tabelle entnommen werden, ähnlich wie die Standardabweichungen der Distanzwerte. Analog zum oben beschriebenen Vorgehen für die Standardabweichungen der Distanzwerte wird hierfür ebenfalls in einer vorab Kalibrationsmessung eine 2D Look-up table erstellt. Ähnlich zur obigen Tabelle werden hier jeweils die statistischen Standardabweichungen der gemessenen Intensität jeweils bezogen auf ein Rauschlevel und eine Intensität eingetragen.

In einer Weiterbildung umfasst das Ermitteln des ersten Zwischenbildes zusätzlich eine zeitliche Mittelung der zumindest einen Intensität mehrerer Datenpunkte, insbesondere eines jeden Datenpunkts, des Einzelbildes oder des zweiten Zwischenbildes mit jeweils einer Intensität eines entsprechenden Datenpunkts einer einstellbaren Anzahl von vorangegangenen Einzelbildern unter Verwendung der ersten dynamischen Schwelle. Das Ermitteln des zweiten Zwischenbildes umfasst dann zusätzlich eine räumliche Mittelung der zumindest einen Intensität mehrerer Datenpunkte, insbesondere eines jeden Datenpunkts des, Einzelbildes oder zumindest einer Intensität eines jeden Datenpunkts des ersten Zwischenbildes mit zumindest einer Intensität einer einstellbaren Anzahl von benachbarten Datenpunkten des Einzelbildes oder des ersten Zwischenbildes unter Verwendung der ersten oder der zweiten dynamischen Schwelle.

Zusätzlich zu der erfindungsgemäß vorgeschlagenen Optimierung der Distanzgenauigkeit wird in dieser Weiterentwicklung die Intensität eines jeden Datenpunkts des gerade betrachteten Frames durch zeitliche und räumliche Mittelung verbessert. In anderen Worten wird damit das Intensitätsbild in seiner statistischen Varianz optimiert. Die Mittelung der Intensitätswerte erfolgt dabei in ähnlicher Art und Weise wie die oben bereits beschriebene Mittelung der Distanzwerte im zeitlichen und im räumlichen Bereich.

In einer Weiterbildung wird die zeitliche und/oder die räumliche Mittelung zusätzlich in Abhängigkeit von einer vierte Schwelle, welche abhängig vom Rauschlevel ist, durchgeführt.

In dieser Weiterbildung wird zusätzlich zur ersten beziehungsweise zweiten Schwelle, deren Distanzkriterium erfüllt ist, die vierte Schwelle angewendet, welche als Rauschleveldifferenzschwelle bezeichnet werden kann. Im Einzelnen werden für die zeitliche Mittelung nur Distanzwerte des entsprechenden Datenpunkts in einem oder mehreren vorangegangen Einzelbildern verwendet, deren Rauschleveldifferenz zu einem Rauschlevel des Datenpunkts des Einzelbildes oder des zweiten Zwischenbildes kleiner als eine Summe einer Standardabweichung des Rauschlevels des Datenpunkts des Einzelbildes oder des zweiten Zwischenbildes und einer Standardabweichung des Rauschlevels des entsprechenden Datenpunkts des vorangegangenen Einzelbildes der einstellbaren Anzahl von vorangegangenen Einzelbildern ist. Für die räumliche Mittelung werden in diesem Fall nur Distanzwerte der benachbarten Datenpunkte aus dem ersten Zwischenbild oder dem Einzelbild verwendet, deren jeweilige Rauschleveldifferenz zum Rauschlevel des Datenpunkts des ersten Zwischenbildes oder des Einzelbildes kleiner als eine Summe der Standardabweichungen des Rauschlevels des Datenpunkts des ersten Zwischenbildes oder des Einzelbildes und einer Standardabweichung des Rauschlevels des jeweiligen benachbarten Datenpunkts der einstellbaren Anzahl von benachbarten Datenpunkte des ersten Zwischenbildes oder des Einzelbildes ist. Dabei kann die Summe auch eine gewichtete Summe sein. Die Standardabweichung des Rauschlevels ist ein Repräsentant für einen statistischen Fehler des Rauschlevels.

In dieser Ausführungsform wird zusätzlich zur Distanzdifferenz die Rauschleveldifferenz jeweils zwischen dem zu mittelnden Datenpunkt und einem dafür in Frage kommenden Datenpunkt aus einem vorangegangenen Frame oder aus der Umgebung im aktuellen Frame dazu eingesetzt, um die Auswahl der zeitlich oder räumlich zu mittelnden Datenpunkte einzuschränken. Sofern auch die Rauschlevel ähnlich sind, wird der jeweilige Datenpunkt in die Mittelung miteinbezogen. Dies ist besonders vorteilhaft in Szenen mit homogener Beleuchtung, bei denen verschiedene Rauschlevel zwingend durch verschiedene Reflektivität des Targets hervorgerufen werden und nicht durch verschiedene Umgebungslichtbedingungen.

In einer möglichen Implementierung werden die statistischen Fehler oder statistischen Schwankungen, also die Standardabweichungen, der Rauschlevel in Abhängigkeit der Rauschlevel in einer eindimensionalen Nachschlagetabelle erfasst. Ein Beispiel einer derartigen Tabelle hat folgende Form:

| Mittleres Rauschlevel | 0 | 10 | 20 | 30 | 40 | 50 | 60 |
|---|---|---|---|---|---|---|---|
| Standardabweichung der gemessenen Rauschlevel | 0 | 1 | 3 | 5 | 4 | 3 | 2 |

Die Tabelle ordnet also einem mittleren Rauschlevel die statistische Standardabweichung des gemessenen Rauschlevels zu. Zur weiteren Erhöhung der Genauigkeit kann zwischen den einzelnen Werten eindimensional interpoliert werden. Ähnlich den obigen beschriebenen Tabellen wird auch diese eindimensionale Tabelle mit Werten von vorab durchgeführten Kalibrationsmessungen befüllt.

Sofern also eine Rauschleveldifferenz zwischen dem zu mittelnden Datenpunkt und dem hierfür in Betracht gezogenen Datenpunkt größer ist als die mit der folgenden Formel ermittelte Summe, wird der in Betracht gezogene Datenpunkt nicht bei der Mittelung berücksichtigt:

$$k_n * (\sigma_x^r + \sigma_i^r) \qquad (8)$$

Dabei bezeichnet $k_n$ einen Gewichtungsfaktor, welcher typischerweise zwischen eins und drei liegt, $\sigma_i^r$ die

Standardabweichung des Rauschlevels des zu mittelnden Datenpunkts und $\sigma_x^r$ die Standardabweichung des Rauschlevels des in Betracht gezogenen Datenpunkts.

Das Verfahren kann beispielsweise auf einem Microcontroller oder einem Field Programmable Gate Array, FPGA, implementiert werden.

In einer Ausführungsform umfasst ein Laufzeitsensor eine Sendeeinheit, eine Empfangseinheit und eine Auswerteeinheit, die miteinander verbunden sind. Die Sendeeinheit umfasst eine Signalquelle, insbesondere eine Lichtquelle, insbesondere eine Laserdiode, und ist zum Aussenden eines Sendesignals, insbesondere eines Lichtstrahls in gepulster Form, eingerichtet. Die Empfangseinheit umfasst ein Empfängerelement, insbesondere ein lichtsensitives Element, insbesondere eine Fotodiode, und ist zum Empfangen des von einer Szene reflektierten Echosignals eingerichtet. Die Auswerteeinheit ist dazu eingerichtet, mindestens ein Einzelbild einer Szene zu erzeugen, wobei jeder Datenpunkt des Einzelbildes einen aus mindestens einem von dem Laufzeitsensor empfangenen Echosignal ermittelten Distanzwert, eine Intensität und ein Rauschlevel umfasst. Des Weiteren ist die Auswerteeinheit dazu eingerichtet, durch zeitliche Mittelung des zumindest einen Distanzwerts mehrerer Datenpunkte, bevorzugt eines jeden Datenpunkts, des Einzelbildes oder eines zweiten Zwischenbildes mit jeweils einem Distanzwert eines entsprechenden Datenpunkts einer einstellbaren Anzahl von vorangegangenen Einzelbildern unter Verwendung einer ersten dynamischen Schwelle, die zumindest SNR-abhängig ist, ein erstes Zwischenbild zu ermitteln. Die Auswerteeinheit ist weiter dazu eingerichtet, durch zusätzliche oder alternative räumliche Mittelung des zumindest einen Distanzwerts mehrerer Datenpunkte, bevorzugt eines jeden Datenpunkts, des Einzelbildes oder durch räumliche Mittelung zumindest eines Distanzwerts mehrerer Datenpunkte, bevorzugt eines jeden Datenpunkts, des ersten Zwischenbildes mit zumindest einem Distanzwert einer einstellbaren Anzahl von benachbarten Datenpunkten des Einzelbildes oder des ersten Zwischenbildes unter Verwendung einer zweiten dynamischen Schwelle, die zumindest SNR-abhängig ist, ein zweites Zwischenbild zu ermitteln. Schließlich ist die Auswerteeinheit dazu eingerichtet, das erste oder das zweite Zwischenbild als Ausgabedistanzbild des Laufzeitsensors bereitzustellen.

Der erfindungsgemäße Laufzeitsensor bereitet das ursprünglich gemessene Distanzbild einer Szene durch zeitliche Mittelung oder durch räumliche Mittelung oder durch zeitliche und räumliche Mittelung der einzelnen Datenpunkte dieses Einzelbildes jeweils unter Verwendung dynamischer SNR-abhängiger Schwellen auf, und erzeugt daraus das Ausgabedistanzbild. Eine Distanzgenauigkeit des Ausgabedistanzbildes ist mit Vorteil gegenüber dem Einzelbild und gegenüber einer Aufbereitung gemäß dem Stand der Technik, die feste Distanzdifferenzschwellen verwendet, deutlich verbessert.

Der Laufzeitsensor kann auch als Time of flight Sensor bezeichnet werden. Er kann als Radarsensor oder als LiDAR-Sensor ausgeführt werden. Durch die vorgeschlagene intelligente zeitliche und räumliche Mittelung von Distanzdatenpunkten wird das Ausgabedistanzbild mit optimierter Präzision bereitgestellt.

Im Übrigen gelten für den Laufzeitsensor die obigen Ausführungen zum erfindungsgemäßen Verfahren zum Bereitstellen des Ausgabedistanzbildes entsprechend, insbesondere hinsichtlich Vorteilen und Ausführungsformen.

In einer möglichen Implementierung ist der erfindungsgemäße Laufzeitsensor dazu eingerichtet, das oben beschriebene Verfahren auszuführen.

Weiterer Gegenstand der Erfindung ist ein Computerprogrammprodukt, das ein computerlesbares Speichermedium umfasst, auf welchem ein Programm gespeichert ist, welches es einem Computer ermöglicht, nach Einlesen des Programms in einen Speicher des Computers das oben beschriebene computerimplementierte Verfahren zum Bereitstellen eines Ausgabedistanzbildes eines Laufzeitsensors auszuführen. Dies insbesondere im Zusammenwirken mit dem oben spezifizierten Laufzeitsensor.

Die hier jeweils beschriebenen Ausführungsformen können untereinander kombiniert werden, sofern es sich nicht explizit etwas ergibt oder beschrieben ist.

Nachfolgend wird die Erfindung rein beispielhaft unter Bezugnahme auf die Figuren weiter erläutert. Es zeigen:

Figur 1 eine beispielhafte Ausführungsform eines Laufzeitsensors wie vorgeschlagen,
Figur 2 bis 5 jeweils ein Bild einer Szene.

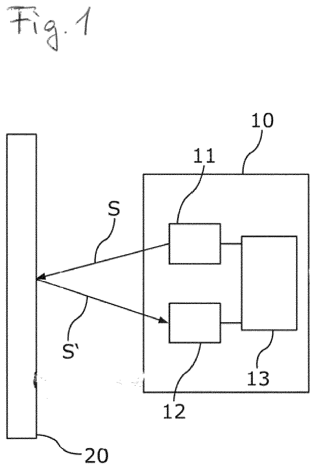

Figur 1 zeigt eine beispielhafte Ausführungsform des Laufzeitsensors wie vorgeschlagen. Der Laufzeitsensor 10 ist als LiDAR oder als Radarsensor ausgeführt. Eine Sendeeinheit 11 des Sensors 10 erzeugt ein Sendesignal S, beispielsweise mit Hilfe mindestes einer Laserdiode. Das elektromagnetische Sendesignal S wird an einer Szene mit einem beispielhaften Objekt 20 reflektiert und von der Empfangseinheit 12 des Laufzeitsensors 10 als Echosignal S' detektiert. Die Auswerteeinheit 13 des Sensors 10 steuert das Senden des Sendesignals S und das Empfangen des Echosignals S'. Die Auswerteeinheit 13 ist dazu eingerichtet, das aus dem Echosignal S' erhaltene Einzelbild der Szene durch intelligente zeitliche und räumliche Mittelung der Distanzwerte der Datenpunkte des Einzelbildes wie oben näher erläutert, ein Ausgabedistanzbild zu erzeugen.

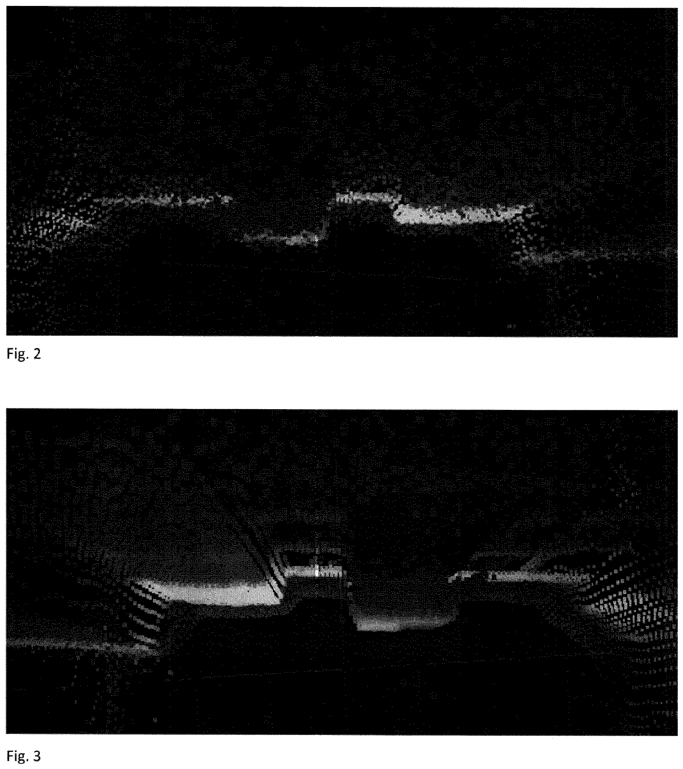

Figur 2 zeigt ein beispielhaftes Einzelbild. Dieses wurde direkt aus dem Echosignal ermittelt und zeigt somit die jeweils stark streuende Punktwolke einer statischen kantenreichen Beispielszene.

Figur 3 zeigt die sogenannte Ground truth der Szene aus Figur 2, welche durch zeitliche Mittelung von 100 Frames erreicht wurde.

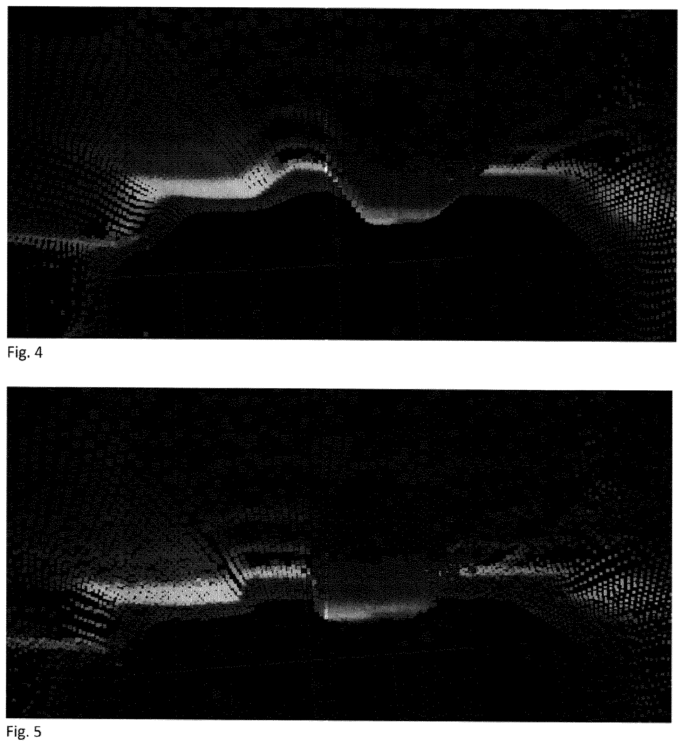

Figur 4 zeigt ein beispielhaftes Ausgabebild eines herkömmlichen Sensors, der feste Distanzschwellen für eine zeitliche und räumliche Mittelung einsetzt. Die zeitliche Mittelung erfolgte dabei beispielhaft über die letzten fünf Einzelbilder, wohingegen die räumliche Mittelung sich jeweils auf die 35 benachbarten Datenpunkte bezog.

Figur 5 zeigt ein beispielhaftes Ausgabedistanzbild zu dem Einzelbild aus Figur 2, welches unter Einsatz des erfindungsgemäßen Verfahrens und Sensors erzeugt wurde. Dabei wurden wie in Figur 4 zur zeitlichen Mittelung die letzten fünf Frames herangezogen. Bei der räumlichen Mittelung wurden die 35 benachbarten Datenpunkte mit einbezogen. Die Erhöhung der Distanzgenauigkeit ist deutlich zu erkennen. Während Figur 4 noch starke Verzerrungen aufgrund der räumlichen Mittelung unter Verwendung einer festen Differenzdistanzschwelle zeigt, ist diese in dem Ausgabedistanzbild der Figur 5 nicht mehr vorhanden. Ferner ist die Varianz der einzelnen Datenpunkte minimal.

Bezugszeichenliste

| 10 | Laufzeitsensor |
|----|----------------|
| 11 | Sendeeinheit |
| 12 | Empfangseinheit |
| 13 | Auswerteeinheit |
| 20 | Objekt |
| S | Sendesignal |
| S' | Echosignal |

**Patentansprüche**

1. Computerimplementiertes Verfahren zum Bereitstellen eines Ausgabedistanzbildes eines Laufzeitsensors (10) aufweisend folgende Schritte:

   Erzeugen eines Einzelbildes einer Szene, wobei jeder Datenpunkt des Einzelbildes einen aus mindestens einem von dem Laufzeitsensor (10) empfangenen Echosignal (S') ermittelten Distanzwert, eine Intensität und ein Rauschlevel umfasst,
   Ermitteln eines ersten Zwischenbildes durch zeitliche Mittelung des mindestens einen Distanzwerts mehrerer Datenpunkte, bevorzugt eines jeden Datenpunkts, des Einzelbildes mit jeweils einem Distanzwert eines entsprechenden Datenpunkts einer einstellbaren Anzahl von vorangegangenen Einzelbildern unter Verwendung einer ersten dynamischen Distanzdifferenzschwelle, die zumindest Signal-Rauschabstand-abhängig ist, und/oder Ermitteln eines zweiten Zwischenbildes durch räumliche Mittelung des zumindest einen Distanzwerts der mehreren Datenpunkte, bevorzugt eines jeden Datenpunkts, des Einzelbildes oder durch räumliche Mittelung zumindest eines Distanzwerts mehrerer Datenpunkte, bevorzugt eines jeden Datenpunkts, des ersten Zwischenbildes mit zumindest einem Distanzwert einer einstellbaren Anzahl von benachbarten Datenpunkten des Einzelbildes oder des ersten Zwischenbildes unter Verwendung einer zweiten dynamischen Distanzdifferenzschwelle, die zumindest Signal-Rauschabstand-abhängig ist,
   Bereitstellen des ersten oder des zweiten Zwischenbildes als Ausgabedistanzbild des Laufzeitsensors.

2. Computerimplementiertes Verfahren zum Bereitstellen eines Ausgabedistanzbildes eines Laufzeitsensors (10) aufweisend folgende Schritte:

   Erzeugen eines Einzelbildes einer Szene, wobei jeder Datenpunkt des Einzelbildes einen aus mindestens einem von dem Laufzeitsensor (10) empfangenen Echosignal (S') ermittelten Distanzwert, eine Intensität und ein Rauschlevel umfasst,
   Ermitteln eines zweiten Zwischenbildes durch räumliche Mittelung des zumindest einen Distanzwerts mehrerer Datenpunkte, bevorzugt eines jeden Datenpunkts, des Einzelbildes mit zumindest einem Distanzwert einer einstellbaren Anzahl von benachbarten Datenpunkten des Einzelbildes unter Verwendung einer zweiten dynamischen Distanzdifferenzschwelle, die zumindest Signal-Rauschabstand-abhängig ist, und
   Ermitteln eines ersten Zwischenbildes durch zeitliche Mittelung mindestens eines Distanzwerts der mehreren Datenpunkte, bevorzugt eines jeden Datenpunkts, des zweiten Zwischenbildes mit jeweils einem Distanzwert eines entsprechenden Datenpunkts einer einstellbaren Anzahl von vorangegangenen Einzelbildern unter Verwendung einer ersten dynamischen Distanzdifferenzschwelle, die zumindest Signal-Rauschabstand-abhängig ist,

Bereitstellen des ersten Zwischenbildes als Ausgabedistanzbild des Laufzeitsensors.

3. Verfahren nach Anspruch 1 oder 2,
   wobei die erste dynamische Distanzdifferenzschwelle für den Datenpunkt jeweils in Abhängigkeit einer auf die Intensität und das Rauschlevel des Datenpunkts bezogenen Standardabweichung des Distanzwerts des Datenpunktes des Einzelbildes oder des zweiten Zwischenbildes und der entsprechenden Datenpunkte der einstellbaren Anzahl von vorangegangenen Einzelbildern im Verhältnis zu einer jeweiligen Differenz der Distanzwerte des Einzelbildes oder des zweiten Zwischenbildes und der entsprechenden Datenpunkte der einstellbaren Anzahl von vorangegangenen Einzelbildern bestimmt wird.

4. Verfahren nach einem der Ansprüche 1 bis 3,
   wobei für die zeitliche Mittelung nur Distanzwerte des entsprechenden Datenpunktes von vorangegangen Einzelbildern verwendet werden, deren Differenz zum Distanzwert des Datenpunktes des Einzelbildes oder des zweiten Zwischenbildes kleiner als eine Summe, insbesondere eine gewichtete Summe, von Standardabweichungen des Distanzwerts des Datenpunkts des Einzelbildes oder des zweiten Zwischenbildes und des entsprechenden Datenpunkts des vorangegangenen Einzelbildes der einstellbaren Anzahl von vorangegangenen Einzelbildern ist.

5. Verfahren nach Anspruch 3 oder 4,
   wobei die Standardabweichung des Distanzwerts des Datenpunktes des Einzelbildes oder des zweiten Zwischenbildes sowie des vorangegangenen Einzelbildes jeweils aus einer ersten Tabelle, die durch vorangegangene Messungen bestimmt wurde, ausgewählt wird.

6. Verfahren nach einem der vorstehenden Ansprüche,
   wobei die zweite dynamische Distanzdifferenzschwelle für den Datenpunkt jeweils in Abhängigkeit einer auf die Intensität und das Rauschlevel des jeweiligen Datenpunkts bezogenen Standardabweichung des Distanzwerts des Datenpunktes des ersten Zwischenbildes oder des Einzelbildes und jeweils eines der entsprechenden Datenpunkte der einstellbaren Anzahl von benachbarten Datenpunkten des ersten Zwischenbildes oder des Einzelbildes im Verhältnis zu einer jeweiligen Differenz der Distanzwerte des Datenpunkts des ersten Zwischenbildes oder des Einzelbildes und jeweils eines der Datenpunkte der einstellbaren Anzahl von benachbarten Datenpunkten des ersten Zwischenbildes oder des Einzelbildes bestimmt wird.

7. Verfahren nach dem vorstehenden Anspruch,
   wobei für die räumliche Mittelung nur Distanzwerte der benachbarten Datenpunkte aus dem ersten Zwischenbild oder dem Einzelbild verwendet werden, deren jeweilige Differenz zum Distanzwert des Datenpunktes des ersten Zwischenbildes oder des Einzelbildes kleiner als eine Summe, insbesondere eine gewichtete Summe, der Standardabweichungen des Distanzwerts des Datenpunkts des ersten Zwischenbildes oder des Einzelbildes und des jeweiligen, benachbarten Datenpunkts der einstellbaren Anzahl von benachbarten Datenpunkte des ersten Zwischenbildes oder des Einzelbildes und eines Offsetwertes ist.

8. Verfahren nach Anspruch 6 oder 7,
   wobei die Standardabweichung des Distanzwerts des Datenpunktes des ersten Zwischenbildes oder des Einzelbildes jeweils aus einer zweiten Tabelle, die durch vorangegangen Messungen bestimmt wurde, ausgewählt wird.

9. Verfahren nach Anspruch 5 und 6 oder nach Anspruch 5 und 7,
   wobei die Standardabweichung des Distanzwerts des Datenpunktes des ersten Zwischenbildes jeweils aus der ersten Tabelle, die anhand des ersten Zwischenbildes aktualisiert wurde, ausgewählt wird.

10. Verfahren nach einem der vorstehenden Ansprüche,
    wobei sowohl die zeitliche als auch die räumliche Mittelung auf Basis eines arithmetischen Mittelwerts oder eines gewichteten Mittelwerts ermittelt wird.

11. Verfahren nach einem der vorstehenden Ansprüche,
    wobei die zeitliche und/oder die räumliche Mittelung zusätzlich in Abhängigkeit von einer dritten Schwelle, welche intensitätsabhängig ist, durchgeführt wird beziehungsweise werden.

12. Verfahren nach dem vorstehenden Anspruch,

wobei das Ermitteln des ersten Zwischenbildes zusätzlich eine zeitliche Mittelung der zumindest einen Intensität mehrerer Datenpunkte, insbesondere eines jeden Datenpunkts, des Einzelbildes oder des zweiten Zwischenbildes mit jeweils einer Intensität eines entsprechenden Datenpunkts einer einstellbaren Anzahl von vorangegangenen Einzelbildern unter Verwendung der ersten dynamischen Distanzdifferenzschwelle umfasst, und wobei das Ermitteln des zweiten Zwischenbildes zusätzlich eine räumliche Mittelung der zumindest einen Intensität mehrerer Datenpunkte, insbesondere eines jeden Datenpunkts, des Einzelbildes oder zumindest einer Intensität eines jeden Datenpunkts des ersten Zwischenbildes mit zumindest einer Intensität einer einstellbaren Anzahl von benachbarten Datenpunkten des Einzelbildes oder des ersten Zwischenbildes unter Verwendung der ersten oder der zweiten dynamischen Distanzdifferenzschwelle umfasst.

13. Verfahren nach einem der vorstehenden Ansprüche,
wobei die zeitliche und/oder die räumliche Mittelung zusätzlich in Abhängigkeit von einer vierten Schwelle, welche rauschlevelabhängig ist, durchgeführt wird beziehungsweise werden.

14. Laufzeitsensor (10) aufweisend

eine Sendeeinheit (11), eine Empfangseinheit (12) und eine Auswerteeinheit (13), die miteinander verbunden sind,
wobei die Sendeeinheit (11) eine Signalquelle, insbesondere eine Lichtquelle, insbesondere eine Laserdiode, umfasst, und zum Aussenden eines Sendesignals (S), insbesondere eines Lichtstrahls in gepulster Form, eingerichtet ist,
wobei die Empfangseinheit (12) ein Empfängerelement, insbesondere ein lichtsensitives Element, insbesondere eine Fotodiode, umfasst, und zum Empfangen des von einer Szene (20) reflektierten Echosignals (S') eingerichtet ist, und
wobei die Auswerteeinheit (13) dazu eingerichtet ist, das Verfahren nach einem der Ansprüche 1 oder 2 durchzuführen.

15. Computerprogrammprodukt, das ein computerlesbares Speichermedium umfasst, auf welchem ein Programm gespeichert ist, das es einem Computer ermöglicht, nach Einlesen des Programms in einen Speicher des Computers das Verfahren gemäß einem der Ansprüche 1 bis 13 insbesondere im Zusammenwirken mit dem Laufzeitsensor gemäß Anspruch 14 auszuführen.

**Claims**

1. A computer-implemented method for providing an output distance image of a time-of-flight sensor (10) comprising the following steps:

generating an individual image of a scene, wherein each data point of the individual image comprises a distance value, which is determined from at least one echo signal (S') received by the time-of-flight sensor (10), an intensity and a noise level;
determining a first intermediate image by a temporal averaging of the at least one distance value of a plurality of data points, preferably of each data point, of the individual image with a respective distance value of a corresponding data point of a settable number of preceding individual images using a first dynamic distance difference threshold which is at least dependent on the signal-to-noise ratio; and/or
determining a second intermediate image by a spatial averaging of the at least one distance value of the plurality of data points, preferably of each data point, of the individual image or by a spatial averaging of at least one distance value of a plurality of data points, preferably of each data point, of the first intermediate image with at least one distance value of a settable number of adjacent data points of the individual image or of the first intermediate image using a second dynamic distance difference threshold which is at least dependent on the signal-to-noise ratio;
providing the first or the second intermediate image as the output distance image of the time-of-flight sensor.

2. A computer-implemented method for providing an output distance image of a time-of-flight sensor (10) comprising the following steps:

generating an individual image of a scene, wherein each data point of the individual image comprises a distance value, which is determined from at least one echo signal (S') received by the time-of-flight sensor (10), an intensity and a noise level;

determining a second intermediate image by a spatial averaging of the at least one distance value of a plurality of data points, preferably of each data point, of the individual image with at least one distance value of a settable number of adjacent data points of the individual image using a second dynamic distance difference threshold which is at least dependent on the signal-to-noise ratio; and

determining a first intermediate image by a temporal averaging of the at least one distance value of the plurality of data points, preferably of each data point, of the second intermediate image with a respective distance value of a corresponding data point of a settable number of preceding individual images using a first dynamic distance difference threshold which is at least dependent on the signal-to-noise ratio;

providing the first intermediate image as the output distance image of the time-of-flight sensor.

3. A method according to claim 1 or 2,
wherein the first dynamic distance threshold for the data point is in each case determined in dependence on a standard deviation, which is related to the intensity and the noise level of the data point, of the distance value of the data point of the individual image or of the second intermediate image and of the corresponding data points of the settable number of preceding individual images in relation to a respective difference of the distance values of the individual image or of the second intermediate image and of the corresponding data points of the settable number of preceding individual images.

4. A method according to any one of the claims 1 to 3,
wherein, for the temporal averaging, only distance values of the corresponding data point of preceding individual images are used whose difference from the distance value of the data point of the individual image or of the second intermediate image is smaller than a sum, in particular a weighted sum, of standard deviations of the distance value of the data point of the individual image or of the second intermediate image and of the corresponding data point of the preceding individual image of the settable number of preceding individual images.

5. A method according to claim 3 or 4,
wherein the standard deviation of the distance value of the data point of the individual image or of the second intermediate image and of the preceding individual image is in each case selected from a first table which was determined by preceding measurements.

6. A method according to any one of the preceding claims,
wherein the second dynamic distance difference threshold for the data point is in each case determined in dependence on a standard deviation, which is related to the intensity and the noise level of the respective data point, of the distance value of the data point of the first intermediate image or of the individual image and of a respective one of the corresponding data points of the settable number of adjacent data points of the first intermediate image or of the individual image in relation to a respective difference of the distance values of the data point of the first intermediate image or of the individual image and of a respective one of the data points of the settable number of adjacent data points of the first intermediate image or of the individual image.

7. A method according to a preceding claim,
wherein, for the spatial averaging, only distance values of the adjacent data points from the first intermediate image or from the individual image are used whose respective difference from the distance value of the data point of the first intermediate image or of the individual image is smaller than a sum, in particular a weighted sum, of the standard deviations of the distance value of the data point of the first intermediate image or of the individual image and of the respective adjacent data point of the settable number of adjacent data points of the first intermediate image or of the individual image and of an offset value.

8. A method according to claim 6 or 7,
wherein the standard deviation, of the distance value of the data point of the first intermediate image or of the individual image is selected in each case from a second table which was determined by preceding measurements.

9. A method according to claim 5 and 6 or according to claim 5 and 7,
wherein the standard deviation of the distance value of the data point of the first intermediate image is in each case selected from the first table which was updated using the first intermediate image.

10. A method according to any one of the preceding claims,
wherein both the temporal averaging and the spatial averaging are determined on the basis of an arithmetic mean value or a weighted mean value.

11. A method according to any one of the preceding claims,
wherein the temporal averaging and/or the spatial averaging is/are additionally performed in dependence on a third threshold which is intensitydependent.

12. A method according to the preceding claim,

wherein the determination of the first intermediate image additionally comprises a temporal averaging of the at least one intensity of a plurality of data points, in particular of each data point, of the individual image or of the second intermediate image with a respective intensity of a corresponding data point of a settable number of preceding individual images using the first dynamic distance difference threshold, and
wherein the determination of the second intermediate image additionally comprises a spatial averaging of the at least one intensity of a plurality of data points, in particular of each data point, of the individual image or of at least one intensity of each data point of the first intermediate image with at least one intensity of a settable number of adjacent data points of the individual image or of the first intermediate image using the first or the second dynamic distance difference threshold.

13. A method according to any one of the preceding claims,
wherein the temporal averaging and/or the spatial averaging is/are additionally performed in dependence on a fourth threshold which is dependent on the noise level.

14. A time-of-flight sensor (10) comprising

a transmission unit (11), a reception unit (12) and an evaluation unit (13) which are connected to one another, wherein the transmission unit (11) comprises a signal source, in particular a light source, in particular a laser diode, and is configured to transmit a transmission signal (S), in particular a light beam in pulsed form, wherein the reception unit (12) comprises a receiver element, in particular a light-sensitive element, in particular a photodiode, and is configured to receive the echo signal (S') reflected from a scene (20), and
wherein the evaluation unit (13) is configured to carry out the method according to one of the claims 1 or 2.

15. A computer program product which comprises a computer-readable storage medium on which a program is stored that enables a computer, after a reading of the program into a memory of the computer, to carry out the method according to any one of the claims 1 to 13, in particular in cooperation with the time-of-flight sensor according to claim 14.

**Revendications**

1. Procédé mis en œuvre par ordinateur pour fournir une image de distance de sortie d'un capteur de temps de vol (10), comprenant les étapes suivantes :

génération d'une image simple d'une scène, chaque point de données de l'image simple comprenant une valeur de distance déterminée à partir d'au moins un signal d'écho (S') reçu par le capteur de temps de vol (10), une intensité et un niveau de bruit,
détermination d'une première image intermédiaire par moyennage temporel de la au moins une valeur de distance de plusieurs points de données, de préférence de chaque point de données, de l'image simple avec respectivement une valeur de distance d'un point de données correspondant d'un nombre réglable d'images simples précédentes, en utilisant un premier seuil dynamique de différence de distance qui dépend au moins du rapport signal/bruit, et/ou
détermination d'une deuxième image intermédiaire par moyennage spatial d'au moins une valeur de distance des multiples points de données, de préférence de chaque point de données, de l'image simple, ou par moyennage spatial d'au moins une valeur de distance de plusieurs points de données, de préférence de chaque point de données, de la première image intermédiaire avec au moins une valeur de distance d'un nombre réglable de points de données adjacents de l'image simple ou de la première image intermédiaire, en utilisant un deuxième seuil de différence de distance dynamique qui dépend au moins du rapport signal/bruit,
fourniture de la première ou la deuxième image intermédiaire en tant qu'image de distance de sortie du capteur de temps de vol.

**2.** Procédé mis en œuvre par ordinateur pour fournir une image de distance de sortie d'un capteur de temps de vol (10), comprenant les étapes suivantes :

génération d'une image simple d'une scène, chaque point de données de l'image simple comprenant une valeur de distance déterminée à partir d'au moins un signal d'écho (S') reçu par le capteur de temps de vol (10), une intensité et un niveau de bruit,

détermination d'une deuxième image intermédiaire par moyennage spatial de la au moins une valeur de distance de plusieurs points de données, de préférence de chaque point de données, de l'image simple avec au moins une valeur de distance d'un nombre réglable de points de données adjacents de l'image simple, en utilisant un deuxième seuil dynamique de différence de distance qui dépend au moins du rapport signal/bruit, et

détermination d'une première image intermédiaire par moyennage temporel d'au moins une valeur de distance des multiples points de données, de préférence de chaque point de données, de la deuxième image intermédiaire avec respectivement une valeur de distance d'un point de données correspondant d'un nombre réglable d'images simples précédentes, en utilisant un premier seuil de différence de distance dynamique qui dépend au moins du rapport signal/bruit,

fourniture de la première image intermédiaire en tant qu'image de distance de sortie du capteur de temps de vol.

**3.** Procédé selon la revendication 1 ou 2,

dans lequel le premier seuil dynamique de différence de distance pour le point de données est déterminé respectivement en fonction d'un écart-type, lié à l'intensité et au niveau de bruit du point de données, de la valeur de distance du point de données de l'image simple ou de la deuxième image intermédiaire et des points de données correspondants du nombre réglable d'images simples précédentes, par rapport à une différence respective des valeurs de distance de l'image simple ou de la deuxième image intermédiaire et des points de données correspondants du nombre réglable d'images simples précédentes.

**4.** Procédé selon l'une des revendications 1 à 3,

dans lequel, pour le calcul du moyennage temporel, seules sont utilisées les valeurs de distance du point de données correspondant provenant d'images simples précédentes dont la différence par rapport à la valeur de distance du point de données de l'image simple ou de la deuxième image intermédiaire est inférieure à une somme, en particulier une somme pondérée, des écarts-types de la valeur de distance du point de données de l'image simple ou de la deuxième image intermédiaire et du point de données correspondant de l'image simple précédente parmi le nombre réglable d'images simples précédentes.

**5.** Procédé selon la revendication 3 ou 4,

dans lequel l'écart-type de la valeur de distance du point de données de l'image simple ou de la deuxième image intermédiaire ainsi que de l'image simple précédente est sélectionné respectivement à partir d'un premier tableau déterminé par des mesures antérieures.

**6.** Procédé selon l'une des revendications précédentes,

dans lequel le deuxième seuil dynamique de différence de distance pour le point de données est déterminé respectivement en fonction d'un écart-type de la valeur de distance du point de données de la première image intermédiaire ou de l'image simple, rapporté à l'intensité et au niveau de bruit du point de données concerné, et respectivement d'un des points de données correspondants parmi le nombre réglable de points de données adjacents de la première image intermédiaire ou de l'image simple, par rapport à une différence respective des valeurs de distance du point de données de la première image intermédiaire ou de l'image simple et de l'un des points de données du nombre réglable de points de données adjacents de la première image intermédiaire ou de l'image simple.

**7.** Procédé selon la revendication précédente,

dans lequel, pour le calcul du moyennage spatial, on utilise uniquement les valeurs de distance des points de données adjacents de la première image intermédiaire ou de l'image simple dont la différence respective par rapport à la valeur de distance du point de données de la première image intermédiaire ou de l'image simple est inférieure à une somme, en particulier une somme pondérée, des écarts-types de la valeur de distance du point de données de la première image intermédiaire ou de l'image simple et du point de données adjacent respectif parmi le nombre réglable de points de données adjacents de la première image intermédiaire ou de l'image simple, et d'une valeur de décalage.

**8.** Procédé selon la revendication 6 ou 7,

dans lequel l'écart-type de la valeur de distance du point de données de la première image intermédiaire ou de l'image simple est sélectionné à chaque fois à partir d'un deuxième tableau déterminé par des mesures antérieures.

9. Procédé selon les revendications 5 et 6 ou selon les revendications 5 et 7, dans lequel l'écart type de la valeur de distance du point de données de la première image intermédiaire est sélectionné à chaque fois à partir de la première table, qui a été mise à jour sur la base de la première image intermédiaire.

10. Procédé selon l'une des revendications précédentes,
dans lequel tant le moyennage temporel que le moyennage spatial sont déterminés sur la base d'une moyenne arithmétique ou d'une moyenne pondérée.

11. Procédé selon l'une des revendications précédentes,
dans lequel le calcul du moyennage temporel et/ou du moyennage spatial est en outre effectué en fonction d'un troisième seuil, qui dépend de l'intensité.

12. Procédé selon la revendication précédente,

dans lequel la détermination de la première image intermédiaire comprenant en outre un lissage temporel de l'intensité au moins une de plusieurs points de données, en particulier de chaque point de données, de l'image simple ou de la deuxième image intermédiaire, avec respectivement une intensité d'un point de données correspondant d'un nombre réglable d'images simples précédentes, en utilisant le premier seuil de différence de distance dynamique, et
dans lequel la détermination de la deuxième image intermédiaire comprenant en outre un moyennage spatial d'au moins une intensité de plusieurs points de données, en particulier de chaque point de données, de l'image simple ou d'au moins une intensité de chaque point de données de la première image intermédiaire, avec au moins une intensité d'un nombre réglable de points de données adjacents de l'image simple ou de la première image intermédiaire, en utilisant le premier ou le deuxième seuil de différence de distance dynamique.

13. Procédé selon l'une des revendications précédentes,
dans lequel le moyennage temporel et/ou le moyennage spatial est ou sont en outre effectuée(s) en fonction d'un quatrième seuil qui dépend du niveau de bruit.

14. Capteur de temps de vol (10) comprenant

une unité d'émission (11), une unité de réception (12) et une unité d'évaluation (13) qui sont reliées entre elles,
dans lequel l'unité d'émission (11) comprenant une source de signal, en particulier une source lumineuse, en particulier une diode laser, et étant agencée pour émettre un signal d'émission (S), en particulier un faisceau lumineux sous forme pulsée,
dans lequel l'unité de réception (12) comprenant un élément récepteur, en particulier un élément photosensible, en particulier une photodiode, et étant agencée pour recevoir le signal d'écho (S') réfléchi par une scène (20), et
dans lequel l'unité d'évaluation (13) étant agencée pour mettre en œuvre le procédé selon l'une des revendications 1 ou 2.

15. Produit logiciel comprenant un support de stockage lisible par ordinateur sur lequel est enregistré un programme qui permet à un ordinateur, après chargement du programme dans une mémoire de l'ordinateur, d'exécuter le procédé selon l'une des revendications 1 à 13, en particulier en coopération avec le capteur de temps de vol selon la revendication 14.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 3663881 A1

**In der Beschreibung aufgeführte Nicht-Patentliteratur**

• **VON LJUBOMIR JOVANOV et al.** Fuzzy logic -based approach to wavelet denoising of 3D images produced by time -of -flight cameras. *OPTICS EXPRESS*, 25 October 2010, vol. 18 (22)

• Algorithms for 3D Shape Scanning with a Depth Camera. **VON YAN CUI et al.** IEEE TRANSACTIONS ON PATTERN ANALYSIS AND MA-CHINE INTELLIGENCE. IEEE COMPUTER SOCIETY, 01 May 2013, vol. 35